(19) Europäisches Patentamt
European Patent Office
Office européen des brevets

(11) Publication number: 0 268 367
A2

(12) # EUROPEAN PATENT APPLICATION

(21) Application number: 87308955.1

(22) Date of filing: 09.10.87

(51) Int. Cl.⁴: G06F 15/40

(30) Priority: 18.11.86 CA 523220

(43) Date of publication of application:
25.05.88 Bulletin 88/21

(84) Designated Contracting States:
DE FR GB NL SE

(71) Applicant: NORTHERN TELECOM LIMITED
600 de la Gauchetiere Street West
Montreal Quebec H3B 4N7(CA)

(72) Inventor: Ali, Yawar Bakht
190 Lees Avenue, Apt.2107
Ottawa Ontario, K1S 5L5(CA)
Inventor: Aubin, Raymond
4 Rue Perrot
Hull Quebec, J8Y 1R3(CA)
Inventor: Hall, Barry Thomas
20 Deerfield Drive, Apt1. 1504
Nepean Ontario, K2J 4L2(CA)

(74) Representative: Crawford, Andrew Birkby et al
A.A. THORNTON & CO. Northumberland
House 303-306 High Holborn
London WC1V 7LE(GB)

(54) **A domain-independent natural language database interface.**

(57) A domain-independent natural language interface for an existing entity-relationship database management system. Syntactically, it relies on an augmented phrase structure grammar which retains the convenience and efficiency of a semantic grammar while removing some of its ad hoc nature. More precisely, it is a syntactic domain-independent grammar augmented with semantic variables used by the parser to enforce the semantic correctness of a query; these semantic variables are only instantiated by a domain-dependent lexicon. Semantically, the interpretation of a query is in terms of general database navigation operations applied to domain-dependent parameters obtained from the lexicon. These operations apply to a virtual database, made of the actual database schema augmented with derived entity-sets. Navigation operations are eventually translated to acutal database queries.

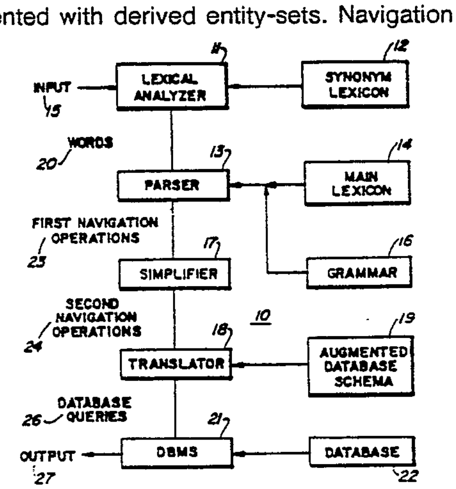


FIG. 1

EP 0 268 367 A2

Xerox Copy Centre

# A DOMAIN-INDEPENDENT NATURAL LANGUAGE DATABASE INTERFACE

This invention relates generally to natural language processing systems, and more specifically to a natural language system for interfacing to an entity-relationship database management system.

Facilitating access to services and information is a key objective of computer systems. Consequently, it is not surprising that one of the first real natural language processing systems, known by the tradename LUNAR (Woods, W.A., Kaplan, R.M., and Nash-Webber, B., "The Lunar Sciences Natural Language Information System", Proceedings, AFIP Conference 42, pages 441-450, Montvale, N.J. : AFIP Press, 1973) was developed for database access. It is believed that the first commercial product in this field was known by the tradename INTELLECT (see Harris, L., "Experience with ROBOT in Twelve Commercial Natural Language Data Base Query Applications" Proceedings, 6th IJCAI, pages 365-368, Tokyo, 1979). More recent systems have aimed at developing tools for portability (e.g. see Grosz, B.J., "TEAM : a Transportable Natural-Language Interface System", Proceedings, Conference of Applied Natural Language Processing, pages 39-45, Santa Monica, California, Feb. 1983).

A method and apparatus for analyzing the syntactic structure of a sentence is disclosed in U.S. patent No. 4,586,160 dated April 29, 1986 by S. Amano et al., to which attention is directed. Reference should also be had to U.S. patent No. 4,453,217 dated June 5, 1984 by R.H. Boivie.

The book "Understanding Artificial Intelligence" developed and published by Texas Instruments Learning Center (© 1986), and sold by Radio Shack as product No. 62-1399 (especially chapter 4 thereof) is a good primer on this general subject.

## Summary of the Invention

The present invention, referred to as the "SESAME" system, is a natural language system developed for interfacing to an entity-relationship database management system (see Chen, P.P., "The Entity-Relationship Model: Toward a Unified View of Data" ACM Transactions on Database Systems 1(1), 1976). The SESAME system was designed to have a domain-independent architecture, adequate coverage and resilience, and reasonable efficiency.

The basic requirement of the syntactic components of the SESAME system is that a change of domain should not entail a change in the grammer. It is believed that the success of many early practical real-time systems was largely due to two combined factors: the augmented transition network (ATN) grammar formalism (Woods, W.A., "Transition Network Grammars for Natural Language Analysis: C.ACM 13, 1970, pages 591-606), which has the power of transformational grammars but with computational virtues, and the semantic grammar formalism (Burton, R.R., "Semantic Grammar : an Engineering Technique for Constructing Natural Language Understanding Systems" Bolt, Beranek, and Newman : BBN Report No. 3453, Cambridge, Mass., 1976 and Hendrix, G., "LIFER : a Natural Language Interface Facility", SIGART Newsletter 61, Feb. 1977, pages 25-26), which embeds semantic information in the syntax of the language. Nevertheless, ATNs can be, in a sense, too powerful for some restricted sublanguages and consequently, unduly inefficient. Semantic grammars can become very large due to their ad hoc nature; furthermore, they are not easily portable between domains.

Instead of an ATN, the SESAME system uses an augmented phrase structure grammar which retains the convenience and efficiency of a semantic grammar while removing some of its ad hoc nature. More precisely, it is a syntactic domain-independent grammar augmented with semantic variables used by the parser to enforce the semantic correctness of a query; these semantic variables are instantiated by a domain-dependent lexicon only.

For the semantic components, the SESAME system's basic requirement is that a change of domain should not imply a change in its knowledge of database navigation. The interpretation of a query is then in terms of general database navigation operations applied to domain-dependent parameters obtained from the lexicon. These operations are built compositionally as a query is parsed, and then globally simplified. In its simplest form, a database navigation operation is made of a Select and a list of Join and Project, called a Path. The PRE system (Epstein, S.S., "Transportable Natural Language Processing Through Simplicity-The PRE System." ACM Transactions Office Information Systems 3,2: April 1985: pages 107-120) generates queries following a similar pattern. The SESAME system, however, goes further. If needed, it can intersect paths. Furthermore, it operates over a virtual database, made of the actual database schema augmented with derived entity-sets. This augmented schema is defined in a separate domain-independent component and achieves a form of mediation.

Stated in other terms, the present invention is a natural language system for interfacing to an entity-relationship database management system, the natural language system characterized by: a) a syntactic, domain-independent grammar; b) an abstract database navigation language; and c) an algorithm that parses natural language input against the grammar to generate the navigation language.

Stated in yet other terms, the present invention is a natural language system for interfacing to an entity-relationship database management system, the natural language system characterized by: a lexical analyzer means for performing synonym substitution prior to parsing a natural language input, the analyzer means being interactive with a synonym lexicon means; a parser means for parsing the output of the lexical analyzer means to generate first database navigation operations, the parser means being interactive with both a main lexicon means and a grammar means; a simplifier means responsive to the first database navigation operations for applying meaning preserving topdown rules to produce expressions in the form of second database navigation operations; and a translator means responsive to the second database navigation operations for producing as an output, database queries in the target database language, the translator means being interactive with an augmented database schema means.

Stated in still other terms, the present invention is a method of interfacing between a natural language and an entity-relationship database management system, the method characterized by the steps of: a) parsing natural language input, employing syntactic and semantic constraints; b) interpreting the natural language input in terms of generic database navigation operations; and c) translating the generic database navigation operations into actual database queries.

Stated in yet other terms, the present invention is a method of interfacing between a natural language input and an entity-relationship database management system, the method characterized by the steps of: parsing the natural language input drawing upon a syntactic grammar written using an augmented phrase structure formalism and a domain-dependent lexicon to produce database navigation operations; and translating the database navigation operations into database queries, drawing upon a database schema means.

## Brief Description of the Drawings

The invention will now be described in more detail with reference to the accompanying drawings wherein like parts in each of the several figures are identified by the same reference character, and wherein:

Figure 1 is a simplified block diagram depicting the SESAME system of the present invention;

Figure 2 is a simplified block diagram depicting the parser of Figure 1;

Figure 3 is a simplified block diagram depicting the grammar of Figure 1; and

Figure 4 is a state diagram depicting the states of the parser.

## Detailed Description

One preferred architecture of the SESAME system 10 is characterized by separate domain-dependent and domain-independent modules. The complete structure of SESAME system 10 is pictured in Figure 1, to which attention is directed.

The first component, the lexical analyzer 11, essentially performs synonym substitution from a synonym lexicon 12 in order to present the parser 13 with a fairly small standard vocabulary. Other functions performed by analyzer 11 are deletion of unknown words and correction for spelling mistakes.

The second component is the parser 13. It implements a topdown backtrack algorithm which draws upon the syntactic grammar 16 and the domain-dependent lexicon 14. Since syntactic and semantic analysis are interleaved, parsing produces first database navigation operations 23 as an interpretation of the input.

The third component is simplifier 17. Because first navigation operations 23 are generated bottom-up by composition, they can be very inefficient. The simplifier 17 applies meaning preserving topdown rules to produce more concise expressions.

The fourth component, translator 18, bridges the gap between the virtual database seen by the user and the actual database 22. It outputs database queries 26 in the target database language from second navigation operations 24. The translator 18 has access to the augmented database schema 19 in order to decompose virtual entity-sets in terms of the actual entity-sets from which they are derived. In addition, translator 18 keeps track of a context of previously computed entity-sets and can refer back to it for efficiency reasons. More will be said about database navigation operations 24 later.

Finally, the fifth component is the database management system (DBMS) 21 itself, which is external to SESAME system 10. It responds directly to the user, except when the empty entity-set is returned. In that case, SESAME system 10 prints an appropriate message.

## LINGUISTIC ASPECTS

The linguistic component of SESAME system 10 takes natural language input typed in by the user and produces as output an intermediate language expression constituting the interpretation of the user's query.

### Example I

As an example consider the case of a person searching the patent database on Infoline. If one wanted to obtain a list of all the patents issued to Northern Telecom Limited one could access the database and enter the command "as = northern telecom*".

In this example the term "as" represents assignee. Other terms are used to represent inventor, abstract, title, etc. The present invention is directed to enabling such a search using natural languages such as English.

With the present invention, one would be able to enter a command such as "Please list all the patents issued to Northern Telecom" and obtain the desired result. One would not have to remember the cryptic syntax required by that particular database.

### Lexical Analysis

During lexical analysis, the lexical analyzer 11 performs substitution for synonyms in the input 15, making use of a pre-defined synonym lexicon 12. Entries in lexicon 12 fall into one of three distinct categories:

a) Synonyms for domain-independent terms: e.g., "every" might be defined as a synonym for "all";

b) Synonyms for terms in the application domain: e.g., "dept" might be defined as a synonym for "department";

c) Synonyms for data values: e.g. for each department, the department name might be defined to be a synonym for the department number.

In the case of data values, one need only specify that department names are synonyms for department numbers, allowing system 10 to automatically extract and associate the name and number of each department in database 22.

### Parsing

The words 20 output from analyzer 11 are passed on to parser 13 which makes use of a domain-independent grammar 16 and lexicon 14. The grammar 16 is written using an augmented phrase structure formalism. This formalism allows context free phrase structure rules to be augmented with variables that can be bound to the semantic categories of subconstituents. During parsing, these semantic variables are matched against one another in order to filter out inputs that are syntactically well-formed but semantically unacceptable. Associated with each grammar rule is an intermediate language expression, representing the interpretation of the phrase parsed by the grammar rule. During parsing, the intermediate language expressions associated with applicable grammar rules are composed, resulting in the intermediate language interpretation of the user's query (i.e. first navigation operations 23), which is then passed on to the simplifier 17.

Using this formalism, we are able to construct grammars that generate fewer ambiguities than do conventional syntactic grammars, yet are much more compact than the semantic grammars used by earlier systems, such as LIFER (see Hendrix, G., "LIFER: a Natural Language Interface Facility" SIGART Newsletter 61, Feb. 1977, pages 25-26).

As an illustration of this point, consider the commonly occurring case of inputs which include a noun that is qualified by two or more prepositional phrases, as in:

1. managers of departments with graduate degrees;
2. locations of customers with software problems;
3. salaries of employees with sales background.

From a syntactic point of view, such inputs are ambiguous, depending on which noun the second prepositional phrase is taken to modify. Thus, a purely syntactic grammar might use a few recursive rules to parse each of the sample inputs shown above, yet would produce two parses for each input. For instance, in the case of (1), one parse would associate "graduate degrees" with "managers" whereas the other would associate "graduate degrees" with "departments". On the other hand, a semantic grammar would use type information to rule out the second, semantically unacceptable, interpretation, resulting in a single parse. However, the semantic grammar would require distinct grammar rules to parse (2) and (3), since they mention entities from different semantic categories, even though the syntactic structure of the two phrases is the same.

In contrast, the grammar 16 of SESAME system 10 combines the advantages of both syntactic and semantic grammars, making use of general lexical categories, such as noun and verb, in order to avoid the proliferation of grammar rules that is characteristic of semantic grammars, and using semantic variable matching to avoid producing as many parses as would syntactic grammars.

Thus, we have achieved portability, while retaining the efficiency of a semantic grammar. Moreover, since we restrict our attention to task-oriented sublanguages, we do not require, or provide, complicated mechanisms to handle the intricacies of unconstrained English. As a result, grammar 16 is easier to construct and is more transparent than those written in more powerful formalisms, such as Augmented Transition Networks or Lexical Functional Grammar.

Grammar 16 will now be described in more detail with reference to Figure 3. Grammar rules may have multiple branches, to represent alternatives. Each branch consists of a syntactic part and a semantic part. The syntactic part of a rule looks like a BNF (Backus-Normal Form) production, except that one or more semantic variables can be associated with each non-terminal (i.e. a compound symbol that refers to a grammar rule), set off from the name of the non-terminal and each other with colons (:). In the body of a rule, when a non-terminal appears, a value (prefixed by the symbol @) may be specified for any of its semantic variables. The effect is to constrain the semantic variable in the subrule to take on the specified value.

The semantic part of a rule (branch) is separated from the syntactic part by a slash (/). It consists of a semantic (Database Navigation Language) form associated with the rule and, possibly, assignments to semantic variables. The semantic form may be a Database Navigation Language token or a Database Navigation Language template. Database Navigation Language tokens are ordinary tokens or lists of tokens. Database Navigation Language templates are placeholders or lists of Database Navigation Language tokens and placeholders. Placeholders are of three kinds:

-the symbol * prefixed to a semantic variable name, to be replaced by the value of that variable.

-the symbol * prefixed to a whole number, say n, to be replaced by the semantic value of the nth item in the body of the associated rule branch, and

-the symbol # prefixed to a whole number, say n, to be replaced by splicing in the semantic value of the nth item as above.

The semantic value of a terminal symbol is itself. The semantic value of a non-terminal symbol is its semantic form, with all placeholders substituted for. Note that a non-terminal symbol is one which refers to a grammar rule; a terminal symbol is one which does not refer to (designate) any other thing.

A variable assignment consists of a variable name followed by a tilde (°), followed by the value (list or token) to be assigned. A special case is when the value is the questionmark symbol (?). This is interpreted to mean that the variable may be unified with any other, without constraint.

A partial meta-grammar for grammar 16 is given below:

Note: Symbols to be taken literally are enclosed in quotes.

```
<SESAME-GRAMMAR>      ::=  '(Grammar)'  <RULES>  'EndGrammar'
<RULES>               ::=  <RULES>  <RULES>
<RULES>               ::=  <RULE>
<RULES>               ::=  <RULE-HEAD>  '::='  <BRANCHES>
<RULE-HEAD>           ::=  <NON-TERMINAL>
<BRANCHES>            ::=  <BRANCH>  <BRANCHES>
<BRANCHES>            ::=  <BRANCH>
<BRANCH>              ::=  <SYNTACTIC-PART>  '/'  <SEMANTIC-PART>
<SYNTACTIC-PART>      ::=  <SYNTACTIC-ELEMS>
<SYNTACTIC-ELEMS>     ::=  <SYNTACTIC-ELEM>  <SYNTACTIC-ELEMS>
<SYNTACTIC-ELEMS>     ::=  <SYNTACTIC-ELEM>
<SYNTACTIC-ELEM>      ::=  <NON-TERMINAL>
<SYNTACTIC-ELEM>      ::=  <TERMINAL>
<SEMANTIC-PART>       ::=  <SEMANTIC-FORM>  <VAR-ASSIGNMENTS>
<SEMANTIC-PART>       ::=  <SEMANTIC-FORM>
<SEMANTIC-FORM>       ::=  <TOKEN>
<SEMANTIC-FORM>       ::=  <LIST>
<VAR-ASSIGNMENTS>     ::=  <VAR-ASSIGNMENTS>  <VAR-ASSIGNMENT>
<VAR-ASSIGNMENTS>     ::=  <VAR-ASSIGNMENT>
<VAR-ASSIGNMENT>      ::=  <SEMVAR>  'O' <SEMVALUE>
<SEMVARS>             ::=  <SEMVAR>  ':' <SEMVARS>
<SEMVARS>             ::=  <SEMVAR>
<SEMVAR>              ::=  <ATOM>
<SEMVALUE>            ::=  <LIST>
<SEMVALUE>            ::=  <TOKEN>
<NON-TERMINAL>        ::=  '<'  <RULE-NAME>  ':'  <SEMVARS>
<NON-TERMINAL>        ::=  '<'  <RULE-NAME>  '>'
<TERMINAL>            ::=  <TOKEN>

<TOKEN> is any sequence of alphanumeric characters.
<ATOM> is a token that does not begin with a numeral.
<LIST> is a sequence of tokens and/or lists enclosed in parentheses.
```

Note that the pseudocode for implementing the operations of Grammar 16 can be found in Appendix A, to which attention is directed.

Parsing is carried out in a topdown, left to right manner, using an efficient iterative algorithm.

The main parsing function is named **"JetParse"**. This function takes these arguments:

-the name of a goal (a non-terminal of the grammar)

-a list of words to parse.

The value returned by the function JetParse is a list of all successful parses found for the given goal. Note that JetParse considers a parse successful if the goal is satisfied, regardless of whether or not all the input is consumed. Prior to discussing the parsing strategy and the form in which parses are represented, some remarks on the internal representation of grammar rules are in order.

The grammar rules have an external, textual form, as described above. This external representation is loaded into the run-time system (i.e. grammar 16) from a data file and compiled (using function ReadppGrammarRules, Appendix A, page 3) into an internal representation whose form is described below. The external form of the rules is designed to be read, understood, and modified with relative ease; the internal form permits efficient parsing.

The internal representation of a grammar rule is stored in Record Rule 40 (Figure 3) as a record (of type Rule) consisting of its name, a list of its semantic variables (field xyzList), and a transition tree (field ParseTree) corresponding to the rule's structure. Each grammar rule is an instance of Record Rule 40 (i.e. there is a one-to-one correspondence between each rule and an instance). Thus, each path through the transition tree represents a different branch or alternative of the grammar rule, with the transitions labelled by the successive symbols (terminal and non-terminal) consumed by the branch. Each path in the transition tree ends at a different terminal state. Each terminal state has associated with it information about the semantic form and variable bindings for the corresponding branch of the rule.

The parser 13 operates as a state machine, cycling through six states (see Figure 4):

-ParseRule: select a new transition tree for searching
-TryBranch: explore a path in the transition tree
-TryParse: select a new path through a subtree
-SubPop: backtrack along a path within a transition tree
-RulePop: reset context after searching a transition tree
-SemTest: perform semantic tests after finding all paths through a transition tree.

The start state is ParseRule (Block 61), and RulePop (Block 70) is the terminal state. See "Appendix B Parsing Algorithm" for an outline of the parsing algorithm, which is discussed in the paragraphs below.

The transition tree for the goal is searched in a depth-first manner. The parser 13 is not a generator: all applicable paths are explored during parsing, but without the ability to produce successful parses as they are found.

Parsing begins in state ParseRule (Block 61), with retrieval of the transition tree associated with the goal. The parser makes use of two stacks, named Stack and SubStack, respectively. While exploring a transition tree, in state TryBranch (Block 62), SubStack is used to save information at choice points. This information is used to restore the context, in state SubPop (Block 68) upon backtracking to the choice point.

When it is necessary to suspend exploration of a tree in order to satisfy a subgoal (i.e., when a rule invokes another rule), information is saved on Stack, the subgoal is made the new goal, and the parser 13 enters state ParseRule (Block 61). When exploration of the subtree is complete, the saved information is popped from Stack, in state RulePop (Block 70), semantic testing is done, in state SemTest (Block 72), in order to eliminate any paths found through the subtree that happen to be semantically invalid; of the remaining paths (if any), one is selected, in state TryParse (Block 65), and exploration of the original tree is resumed, in state TryBranch (Block 62). After exploration of the remainder of the original tree is complete, the parser 13 eventually backtracks and selects a new path through the subtree, if any remain, in state TryParse (Block 65).

Upon reaching the end of a path through a tree, in state TryBranch (Block 62), semantic testing is performed to ensure that any new variable bindings are compatible with existing bindings. If they are compatible, a representation of the new parse (see below for details of the representation) is constructed and added to the list of parses for the goal under consideration.

The parser 13 returns a list of all the parses found. Parses are represented by Parse records, each of which contains a list of the input unconsumed by the parse, and a parse tree. Parse trees contain semantic as well as syntactic information. They are represented by PSR records, each of which contains the name of the top-level rule associated with the tree, values for semantic variables associated with the rule, the semantic (Database Navigation Language) form associated with the tree, the names of the semantic variables associated with the rule, and a list of the nodes dominated by the root. Leaf nodes are represented by the terminal symbols associated with them. Internal nodes are represented by PSRT records, each consisting of a list of names of semantic variables associated with the node, as well as a PSR record representing the subtree rooted at that node.

Once the input has been processed by the parser 13, any parses that failed to consume all the input are discarded.

If any parses remain after this filtering, they are processed by the function **EvalMainForm** (see Appendix A) to construct Database Navigation Language expressions representing the respective interpretations of the parses. **EvalMainForm** operates by traversing a parse tree and recursively extracting Database Navigation Language tokens and filling in the Database Navigation Language templates, from the leaves of the tree upwards.

In case parsing is unsuccessful, any unrecognized words in the input are flagged and an error message output. If all the words are recognized but parsing is unsuccessful nevertheless, this fact is simply recorded and a message output to this effect.

## DATABASE NAVIGATION

First Database navigation operations 23 are expressed in an intermediate language that is modelled on Relational Algebra, though not all algebraic operators are provided. The operators that we do provide are as follows:

1. SEL:

. corresponds to selection

. takes as arguments the name of an entity-set and, optionally, one or more selection conditions.

A selection condition is list consisting of a predicate name, followed by arguments. The predicates currently defined are:

-EQ: asserts equality of its two arguments

-NEQ: asserts inequality of its two arguments

- GT: asserts that its first argument is greater than its second

-GE: asserts that its first argument is greater than or equal to its second argument

-LT: asserts that its first argument is less than its second argument

-LE: asserts that its first argument is less than or equal to its second argument

-BETW: asserts that its first argument lies in the range defined by its second and third arguments If a number of selection conditions co-occur in a SEL, they are considered to be conjoined (AND-ed together). Disjunction may be represented by embedding any number of selection conditions within a list headed by the symbol "OR". Such a list may appear anywhere that a simple selection condition can.

2. INTER:

. corresponds to intersection

. takes as arguments one or more entity-sets

3. YFER:

. corresponds to a join followed by a projection

. takes two arguments: a list containing the names of one or more relationships (the path), and the name of an entity-set (the origin).

. effect is to perform a join between the origin and another entity-set, linked to it by the path, projecting out the fields of the latter.

A YFER can be seen as specifying a traversal of a structured database, starting at a given entity-set and following some pre-defined path to end up at another entity-set. If the length of the path is greater than one then a single YFER may correspond to a number of joins and projections.

We use the term "relationship" to refer to a predefined link between two entity-sets, based upon specific fields of each of the two. For example RCITYSTAFFLOC might be the name of a relationship between the CITY and STAFF entity-sets, using the CITY-NAME field of the CITY entity-set and the STAFF-LOCATION field of the STAFF entity-set. Then, traversing the RCITYSTAFFLOC relationship from CITY to STAFF would yield all members of the latter entity-set whose STAFF-LOCATION field values are identical to the CITY-NAME field values of one or more members of the CITY entity-set.

## Generation of Navigation Operations

Intermediate language expressions are built during parsing by filling in and composing templates associated with individual grammar rules. Thus, parsing of a simple noun phrase would generate a SEL operation, e.g., parsing "Ottawa" might generate

(SEL CITY (EQ CITY-NAME OTTAWA)).

A noun qualified by a prepositional phrase would result in a SEL followed by a YFER, e.g., "staff in Ottawa" might translate to

(YFER (RCITYSTAFFLOC) (SEL CITY (EQ CITY-NAME OTTAWA)))

which specifies selection of all CITY records with "Ottawa" as value of the CITY-NAME field, followed by a join with the set of STAFF records having the same value for the STAFF-LOCATION field, projecting out the fields of the latter entity-set.

As a further illustration, parsing a noun phrase with two qualifying phrases would correspond to an INTER of two expressions, each consisting of a SEL followed by a YFER, e.g, parsing "staff in Ottawa managed by Smith" might yield

```
(INTER (YFER (RCITYSTAFFLOC)
             (SEL CITY (EQ CITY-NAME OTTAWA)))
       (YFER (RMANAGERSTAFFMGR)
             (SEL MANAGER (EQ LAST-NAME SMITH))))
```

where RMANAGERSTAFFMGR is the name of a relationship between the MANAGER and STAFF entity-sets.

Simplification of Navigation Operations

The database navigation operations produced during parsing often contain redundancies, since they are generated compositionally, in a bottom-up manner. For example, parsing a qualified noun phrase will always result in generation of an INTER, even if there is only a single qualifier. Thus, in actual fact, the noun phrase "staff in Ottawa" would translate to the redundant intermediate language expression

```
(INTER (YFER (RCITYSTAFFLOC)
             (SEL CITY (EQ CITY-NAME OTTAWA))))
```

corresponding to the intersection of a single operand.

It is the task of simplifier 17 to remove such redundancies from database navigation specifications prior to query generation. Simplifier 17 analyzes intermediate language expressions and applies general, meaning preserving transformations to eliminate redundancies such as intersections of singletons, intersections of sets with their supersets, joins of singletons, and repetitious conditions on selections.

Query Generation

The simplified navigation operations (i.e. second navigation operations 24) are passed on to translator 18, which will generate the corresponding database queries 26 in the target database language. In order to do this, translator 18 needs access to the database schema, which is provided to it in a file (i.e. augmented database schema 19). The translation of simple database navigation operations 24 into the target database language (i.e. queries 26), is straightforward, and translator 18 possesses rules for translating each different type of navigation operation. Complex, nested intermediate language expressions are recursively decomposed until their constituents are simple enough to be directly translated. Once the translations of the subconstituents have been generated and written out to a file on disk (not shown), the translations of their embedding expressions can be generated, allowing references to entity-sets derived while translating the subconstituents. When the translation is complete, the file on disk (not shown) containing the database query is passed onto the database management system (DBMS) 21, which processes it and responds to the user.

Virtual Entity-Sets and the Augmented Schema

The database schema 19 provided to translator 18 can be augmented with virtual entity-sets (not shown) in order to provide a form of mediation between the user's view of the domain and the actual organization of the database 22. This allows the user to refer to a virtual entity-set in the same manner as an actual entity-set. Moreover, since grammer 16 is domain-independent, it does not distinguish betweeen actual and virtual entity-sets when generating first navigation operations 23. During the query generation phase, translator 18 replaces references to virtual entity-sets by sequences of operations on actual entity-sets, as specified by their definitions in the augmented schema 19.

For example, in our current application domain, users make use of the concepts of departments, staff, and managers. However, while the database schema 19 defines the entity-sets DEPARTMENT and STAFF, there is no entity-set corresponding to the concept of a manager. Rather, the DEPARTMENT entity-set has fields for the manager's last name and initials. SESAME system 10 allows the user to remain unaware of the details of the representation, being able to refer to managers, departments, or staff using the same syntactic constructs. During parsing, occurrences of the noun "manager" will translate to
(SEL MANAGER)
in the intermediate representation, just as "department" would translate to
(SEL DEPARTMENT).

However, during query generation, translator 18 would make use of the definition of MANAGER in the augmented database schema 19 to translate
(SEL MANAGER)
to selection of the DEPARTMENT entity-set and projection of the fields corresponding to the manager's last name and initials.

Reusing Previously Computed Entity-Sets

In order to use the database 22 more efficiently, translator 18 keeps track of previously computed entity-sets, indexed by the intermediate language expressions and subexpressions corresponding to them. Then, upon being given an intermediate language expression to be translated (i.e. second navigation operations 24), translator 18 first checks whether the corresponding entity-set has been previously computed, and if so reuses it rather than computing it anew. Since translator 18 operates in a topdown, recursive manner, it always makes the most efficient use of previously computed entity-set yet has the ability to utilize them even when translating subexpressions of the original intermediate language expression.

Example II

Assume the following grammer rules (in their external form):
G1) <NounPhrase:x> ::= <Noun:x> <Noun:x> / (INTER *1 *2)
G2) <NounPhrase:x> ::= <Noun:x> <PP:x> / (INTER *1 *2)
G3) <PP:x> ::= <Prep:x:y> <NP:y> / (YFER *1 *2)
where *1 and *2 are place holders.
Assume the following lexicon entries (which take the same form as grammar rules):
L1) <Noun:x> ::= Employees / (SEL STAFF) x°STAFF
L2) <Noun:x> ::= Dept / (SEL DEPT) x°DEPT
L3) <Noun:x> ::= 1990 / (SEL DEPT (EQ DNO 1990)) x°DEPT
L4) <Prep:x:y> ::= in / (RSTAFFDEPT) x°STAFF y°DEPT
Further assume that our database contains the entities STAFF and DEPT, related by the predefined relationship RSTAFFDEPT.
Let DNO be a field of the DEPT entity representing the dept. number. Consider the following input to the system:
"Employees in department 1990"
Assume that "department" has been defined to be a synonym for "dept". The lexical analyzer will substitute for synonyms, resulting in:
"Employees in dept 1990"
This will be parsed using the given grammar rules and lexicon entries, as below:

```
Employees          in                 dept        1990
(L1) |         (L4)|             (L2) |      (L3) |
<Noun:STAFF>  <Prep:STAFF:DEPT>  <Noun:DEPT>  <Noun:DEPT>
      \              \                \            /
       \              \                \  (G1)    /
        \              \           <Noun Phrase:DEPT>
         \              \                    /
          \              \  (G3)            /
           \             <PP:STAFF>
            \                 /
             \    <G2>       /
        <Noun Phrase:STAFF>
```

The function EvalMainForm will be invoked on the resulting parse tree and will construct the following Database Navigation Language expression (first navigation operations 23) as the interpretation of the original query:

```
(INTER                                   -----------------(G2)
    (SEL STAFF)                          ---------------(L1)
    (YFER)                               ---------------(G3)
        (RSTAFFDEPT)                     -----------(L4)
        (INTER)                          -----------(G1)
            (SEL DEPT)                   ---(L2)
            (SEL DEPT (EQ DNO 1990))     ---(L3)
        )
    )
)
```

The Simplifier 17 will transform the above to the following simpler, semantically equivalent, expression:

```
(YFER
    (RSTAFFDEPT)
    (SEL DEPT (EQ DNO 1990))
)
```

Finally, the simplified expression would be translated (by translator 18) straightforwardly, into a query to the database, resulting in selection of the DEPT records having a DNO of 1990, followed by a join with all STAFF records associated with them via the RSTAFFDEPT relationship, projecting out the fields of the STAFF records thus retrieved.

Summary

Architectural independence from the database 22 domain and schema was achieved through (a) the separation between a domain-independent syntactic grammar 16 and a domain-dependent lexicon 14 and (b) the separation between general database navigation operations 23 and the actual database 22 schema augmented with derived realtions (i.e. augmented database schema 19). Efficiency was obtained by using an augmented phrase structure grammar formalism interleaving syntactic and semantic processing. A reasonable effort was made to give feedback to the user upon failure of the interface by displaying the unrecognized input fragments.


Appendices A and B, describing software useful for understanding the present invention, follow. They are believed to be self-explanatory.

## Claims

1. A natural language system (10) for interfacing to an entity-relationship database management system (21), said natural language system characterized by:

a) a syntactic, domain-independent grammar (16);

b) an abstract database navigation language(23); and

c) an algorithm (13) that parses natural language input against said grammar (16) to generate said navigation language (23).

2. The system of claim 1 further including a lexical analyzer means (11) for performing synonym substitution from a synonym lexicon (12) prior to parsing said natural language via said algorithm.

3. The system of claim 2 wherein said algorithm (13) is implemented in a topdown, backtrack fashion, which draws upon a syntactic grammar (16) and a domain-dependent lexicon (14) and produces database navigation operations (23) as an output.

4. The system of claim 3 further including a simplifier means (17) responsive to said first database navigation operations (23) for applying meaning preserving topdown rules to produce more concise expressions in the form of said second database navigation operations (24).

5. The system of claim 4 further including a translator means (18) responsive to said second database navigation operations (24) for outputting database queries (26) in the target database language.

6. A natural language system (10) for interfacing to an entity-relationship database management system (21), said natural language system characterized by:

a lexical analyzer means (11) for performing synonym substitution prior to parsing a natural language input, said analyzer means being interactive with a synonym lexicon means (12);

a parser means (13) for parsing the output of said lexical analyzer means (11) to generate first database navigation operations (23), said parser means being interactive with both a main lexicon means (14) and a grammar means (16);

a simplifier means (17) responsive to said first database navigation operations (23) for applying meaning preserving topdown rules to produce expressions in the form of second database navigation operations (24); and

a translator means (18) responsive to said second database navigation operations (24) for producing as an output, database queries (26) in the target database language, said translator means being interactive with an augmented database schema means (19).

7. A method of interfacing between a natural language and an entity-relationship database management system (21), said method characterized by the steps of:

a) parsing (13) natural language input, employing syntactic and semantic constraints;

b) interpreting said natural language input in terms of generic database navigation operations; and

c) translating (18) said generic database navigation operations into actual database queries.

8. The method of claim 7 further including the step of performing synonym substitution (12) prior to the step of parsing.

9. The method of claim 8 wherein said parsing step is implemented in a topdown, backtrack fashion, drawing upon a syntactic grammar (16) and a domain-dependent lexicon (14).

10. The method of claim 9 further including the step of simplifying (17) said first database navigation operations to produce second database navigation operations (24).

11. The method of claim 10 further including the step of translating (18) said second database navigation operations (24) to produce said database queries (26).

12. A method of interfacing between a natural language input and an entity-relationship database management system, said method characterized by the steps of:
parsing (13) said natural language input drawing upon a syntactic grammar (16) written using an augmented phrase structure formalism and a domain-dependent lexicon (14) to produce database navigation operations (23);
translating (18) said database navigation operations into database queries (26), drawing upon a database schema means (19).

13. The method of claim 12 wherein said parsing includes the steps of:
a) selecting (61) a new transition tree for searching;
b) exploring (62) a path in said transition tree;
c) selecting (65) a new path through a subtree of said transition tree;
d) backtracking (68) along a path within said transition tree;
e) resetting the context (70) after searching said transititon tree; and
f) performing semantic tests (72) after finding all applicable paths through said transition tree.

14. The method of claim 12 wherein said parsing is performed according to the following algorithm, wherein the input is either a Name identifying the grammar goal to be satisfied or Words to be parsed:
a) ParseRule:
Fetch the transition tree for Name.
Enter state TryBranch;

b) TryBranch:
If no more branches remain in the current tree, then
-enter state TryParse.
Get the next branch off the tree.
If at the end of the Branch, then
-perform semantic testing,
-build a representation for the parse, if valid,
-enter state TryBranch.
If the branch can be followed by comsuming a terminal, then
-save the context on Substack,
-perform the next transition on the branch, consuming input from Words,
-set the current tree to the remainder of the branch,
-enter state TryBranch.
If a subgoal must be satisfied to continue along the branch, then
-save the context on Stack,
-set Name to the new goal,
-enter state ParseRule.
Enter state TryBranch;
c) TryParse:
If a new parse satisfying a previous subgoal can be found, then
-select the new parse,
-reset the context, including the tree, to the situation obtaining after satisfaction of the subgoal,
-enter state TryBranch.
Enter state SubPop;
d) SubPop:
If a saved context exists on SubStack, then
-reset the context to the saved one,
-enter state TryBranch.
Enter state RulePop;
e) RulePop:
If a saved context exists on Stack, then
-reset the context to the saved one,
-enter state Semtest.
Terminate execution, returning all valid parses found; and
f) SemTest:
If no parses were found satisfying the most recently postulated subgoal, then
-enter state TryBranch.

Save the context on SubStack.
Perform semantic filtering on the above-mentioned parses.
Enter state TryParse.

## APPENDIX A

This document contains data structure definitions and pseudo-code for the algorithms used to read in and compile SESAME system 10 grammars, and to parse input against compiled grammars.

A partial meta-grammar for SESAME grammars is given below:

Note: Symbols to be taken literally are enclosed in quotes.

```
<SESAME-GRAMMAR>    ::=  '(Grammar)'  <RULES>  'EndGrammar'
<RULES>             ::=  <RULES>  <RULES>
<RULES>             ::=  <RULE>
<RULES>             ::=  <RULE-HEAD>  '::='  <BRANCHES>
<RULE-HEAD>         ::=  <NON-TERMINAL>
<BRANCHES>          ::=  <BRANCH>  <BRANCHES>
<BRANCHES>          ::=  <BRANCH>
<BRANCH>            ::=  <SYNTACTIC-PART>  '/'  <SEMANTIC-PART>
<SYNTACTIC-PART>    ::=  <SYNTACTIC-ELEMS>
<SYNTACTIC-ELEMS>   ::=  <SYNTACTIC-ELEM>  <SYNTACTIC-ELEMS>
<SYNTACTIC-ELEMS>   ::=  <SYNTACTIC-ELEM>
<SYNTACTIC-ELEM>    ::=  <NON-TERMINAL>
<SYNTACTIC-ELEM>    ::=  <TERMINAL>
<SEMANTIC-PART>     ::=  <SEMANTIC-FORM>  <VAR-ASSIGNMENTS>
<SEMANTIC-PART>     ::=  <SEMANTIC-FORM>
<SEMANTIC-FORM>     ::=  <TOKEN>
<SEMANTIC-FORM>     ::=  <LIST>
<VAR-ASSIGNMENTS>   ::=  <VAR-ASSIGNMENTS>  <VAR-ASSIGNMENT>
<VAR-ASSIGNMENTS>   ::=  <VAR-ASSIGNMENT>
<VAR-ASSIGNMENT>    ::=  <SEMVAR>  'O'  <SEMVALUE>
<SEMVARS>           ::=  <SEMVAR>  ':'  <SEMVARS>
<SEMVARS>           ::=  <SEMVAR>
<SEMVAR>            ::=  <ATOM>
<SEMVALUE>          ::=  <LIST>
<SEMVALUE>          ::=  <TOKEN>
<NON-TERMINAL>      ::=  '<'  <RULE-NAME>  ':'  <SEMVARS>
<NON-TERMINAL>      ::=  '<'  <RULE-NAME>  '>'
<TERMINAL>          ::=  <TOKEN>
```

<TOKEN> is any sequence of alphanumeric characters.
<ATOM> is a token that does not begin with a numeral.
<LIST> is a sequence of tokens and/or lists enclosed in parentheses.

***** - DATA STRUCTURE DEFINITIONS - *****

```
*******************************
*                             *
*       - RECORD RULE -       *
*                             *
*******************************
```

RECORD RULE 40 (Figure 3).

USE: Internal representation of a grammar 16 rule.

```
   FIELDS:  RuleName:  name of the grammar 16 rule;
            xyzList:  list of semantic variables associated with
                      the rule.
            ParseTree: transition tree representation of the rule.

END RULE.

                   ********************************
                   *                              *
                   *       - RECORD PSR -         *
                   *                              *
                   ********************************

RECORD PSR 50 (Figure 2).

   USE:  Representation of a parse tree.

   FIELDS:  NodeType:  Name of the syntactic category associated
                       with the root node of the tree;
            SemVars:   list of bindings for semantic variables
                       associated with the root;
            MainForm:  semantic form assoicated with the tree;
            BottomLink:  list of names of semantic variables
                         associated with the root;
            TermList:  list of PSRT records, each representing a
                       node below the root;

END PSR.

                   ********************************
                   *                              *
                   *       - RECORD PSRT -        *
                   *                              *
                   ********************************

RECORD PSRT 52 (Figure 2).

   USE:  Representation of a node of a parse tree.

   FIELDS:  TopLink:  list of names of semantic variables associated
                      with the node;
            psr: a PSR record, representing a subtree rooted at the
                 node.

END PSRT.

                   ******************************
                   *                            *
                   *      - RECORD PARSE -      *
                   *                            *
                   ******************************

RECORD PARSE 51 (Figure 2).

   USE:  Representation of a (possibly partial) parse.
```

```
FIELDS:  Words:  list of input words not used up by the parse;
         psr: a PSR record, representing the parse tree
              associated with the parse.

END PARSE.
```

***** PSEUDO-CODE FOR FUNCTIONS AND SUBROUTINES *****

```
*****************************
*                           *
*  - SUBROUTINE GRAMMAR -   *
*                           *
*****************************

SUBROUTINE GRAMMAR 41 (Figure 3)

   PURPOSE:  Cause grammar 16 rules to be read in, compiled, and
             stored.

   INPUT:    None.

   OUTPUT:   None.

   VARS:     None

   FOR rule in READPPGRAMMARRULES()
     FETCH RULE where RuleName = rule.
     ASSOCIATE rule with RULE.
   ENDFOR.

   END GRAMMAR.

*************************************
*                                   *
* - FUNCTION READPPGRAMMARRULES -   *
*                                   *
*************************************

FUNCTION READPPGRAMMARRULES 42 (Figure 3)

   PURPOSE:  Read in and compile grammar 16 rules.

   INPUT:  None

   OUTPUT:  A list of RULE records, one for each grammar 16 rule.

   VARS:  RuleList, LineList, FormSets, TermList, NewTermList,
          FormList, Mode, Token, RuleHead, LitAtom, NexToken.

   SET Mode to 'NullMode'
   SET Token to the next token in the input stream.
   UNTIL Token = 'EndGrammar' DO
      CASE Mode of
```

```
'NullMode'  :  IF Token is the left-hand-side of a rule THEN
                 SET RuleHead to Token.
                 SET Mode to 'HeadMode'.
               ENDIF.

'HeadMode'  :  IF Token is '::=' THEN
                 SET Mode to 'RuleMode'.
               ELSE
                 SET Mode to 'NullMode'.
               ENDIF.

'RuleMode'  :  IF Token is '/' THEN
                 SET Mode to 'FormMode'.
               ELSE
                 ADD Token to the end of TermList.
               ENDIF.

'FormMode'  :  IF Token is not a non-terminal symbol THEN
                 SET LitAtom to Token.
                 SET Mode to 'FormMode2'.
               ELSE
                 ADD the name of the rule and
                     Token to the end of FormList.
                 SET Mode to 'TailMode'.
               ENDIF.

'Formode2' :  IF Token is the variable assignment symbol
              '<-' THEN
                 SET Mode to 'TailMode3'
               ELSEIF Token is not a non-terminal symbol THEN
                 ADD the name of the rule and
                     LitAtom to the end of FormList.
                 SET LitAtom to Token.
                 SET Mode to 'TailMode2'.
               ELSE
                 ADD TermList to the end of LineList.
                 ADD FormList to the end of FormSets.
                 SET FormList to the empty list.
                 SET TermList to the empty list.
                 SET NexToken to Token.
                 SET Mode to 'EndMode'.
               ENDIF.

'TailMode'  :  IF Token is not a non-terminal symbol THEN
                 SET LitAtom to Token.
                 SET Mode to 'TailMode2'.
               ELSE
                 ADD TermList to the end of LineList.
                 ADD FormList to the end of FormSets.
                 SET FormList to the empty list.
                 SET TermList to the empty list.
                 SET NexToken to Token.
                 SET Mode to 'EndMode'.
               ENDIF.
```

```
        'TailMode2' :  IF Token is the variable assignment symbol
                       '<-' THEN
                         SET Mode to 'TailMode3'.
                       ELSEIF Token is '/' THEN
                         ADD TermList to the end of LineList.
                         ADD FormList to the end of FormSets.
                         SET FormList to the empty list.
                         SET TermList to a list containing LitAtom.
                         SET Mode to 'FormMode'.
                       ELSE
                         ADD TermList to the end of LineList.
                         ADD FormList to the end of FormSets.
                         SET FormList to the empty list.
                         SET TermList to a list consisting of LitAtom
                             and Token.
                         SET Mode to 'RuleMode'.
                       ENDIF.

        'TailMode3' :  ADD LitAtom and Token to the end of FormList.
                       SET Mode to 'TailMode'.

        'EndMode'   :  IF Token is '::=' THEN
                         ADD FORMRULE(RuleHead, LineList, FormSets)
                             to the end of RuleList.
                         SET RuleHead to NexToken.
                         SET LineList to the empty list.
                         SET FormSets to the empty list.
                         SET Mode to 'RuleMode'.
                       ELSEIF Token is '/' THEN
                         SET TermList to a list containing NexToken.
                         SET Mode to 'FormMode'.
                       ELSE
                         SET TermList to a list consisting of NexToken
                             and Token.
                         SET Mode to 'RuleMode'.
                       ENDIF.
ENDCASE.
SET Token to the next token in the input stream.
ENDUNTIL.
IF Mode is 'TailMode' THEN
  ADD TermList to the end of LineList.
  ADD FormList to the end of FormSets.
  SET FormList to the empty list.
  SET TermList to the empty list.
  ADD FORMRULE(RuleHead, LineList, FormSets) to the end of RuleList.
ELSEIF Mode is 'FormMode2' THEN
  ADD the name of the rule and LitAtom to the end of FormList.
  ADD TermList to the end of LineList.
  ADD FormList to the end of FormSets.
  SET FormList to the empty list.
  SET TermList to the empty list.
  ADD FORMRULE(RuleHead, LineList, FormSets) to
      the end of RuleList.
ENDIF.
RETURN RuleList.
```

```
END READPPGRAMMARRULES.

                    *****************************
                    *                           *
                    *   - FUNCTION FORMRULE -   *
                    *                           *
                    *****************************

FUNCTION FORMRULE 43 (Figure 3)

  PURPOSE:  Create a RULE record for a grammar 16 rule.

  INPUT: RuleHead:  the non-terminal symbol for the rule;
         TermSets:  the right-hand-sides of each branch of the rule;
         FormSets:  the semantic forms associated with each branch of
                    the rule.

  OUTPUT:  a RULE record for the grammar 16 rule.

  VARS:  None.

  CREATE a new RULE with
         RuleName <- the name of the rule (from RuleHead),
         xyzList <- the semantic variables associated with
                        the rule (from RuleHead),
         ParseTree <- MAKEPARSETREE(TermSets, FormSets).
  RETURN the RULE.

END FORMRULE.

                    ******************************
                    *                            *
                    * - FUNCTION MAKEPARSETREE - *
                    *                            *
                    ******************************

FUNCTION MAKEPARSETREE 44 (Figure 3)

  PURPOSE:  Compile a grammar 16 rule.

  INPUT:  TermSets:  the right-hand-sides of each branch of
                     the grammar rule;
          FormSets:  the semantic forms and variables associated with
                     each branch of the rule.

  OUTPUT:  the transition tree corresponding to the grammar 16 rule.

  VARS:  None.

  IF TermSets is the empty list THEN
     RETURN a list containing the null symbol.
  ELSE
     RETURN PARSETREELINK(the first branch in TermSets,
                          the first entry in FormSets,
```

```
                    MAKEPARSETREE(the remainder of TermSets,
                                  the remainder of FormSets)).

END MAKEPARSETREE.

                  ******************************
                  *                            *
                  * - FUNCTION PARSETREELINK - *
                  *                            *
                  ******************************

FUNCTION PARSETREELINK 45 (Figure 3)

  PURPOSE: Compile one branch of a grammar 16 rule and link it into
           the transition tree for the rule.

  INPUT:  TermSet:  the right-hand-side of one branch of the rule;
          FormSet:  the semantic form and variables associated with
                    the branch;
          SubTree:  the transition sub-tree corresponding to the
                    remaining branches of the rule.

  OUTPUT:  SubTree augmented with the transition corresponding to
           the given branch of the grammar 16 rule.

  VARS:  Found.

  IF TermSet is the empty list THEN
    SET SubTree to the tree obtained by inserting
        MAKEPARSEBRANCH(TermSet, FormSet) as the first branch of
           SubTree
  ELSE
    FOR Branch in SubTree
      IF the first symbol in TermSet corresponds to the first
         transition along Branch THEN
        SET SubTree to PARSETREELINK(the remainder of TermSet,
                                     FormSet, Branch).
        SET Found to 'TRUE'.
    ENDIF.
   ENDFOR.
      IF Found THEN
        SET SubTree to the tree obtained by inserting
            MAKEPARSBRANCH(TermSet, FormSet) as
            the first branch of SubTree.
      ENDIF.
   ENDIF.
   RETURN SubTree.

 END PARSETREELINK.

                ************************************
                *                                  *
                *    - FUNCTION MAKEPARSEBRANCH -  *
                *                                  *
                ************************************
```

```
FUNCTION MAKEPARSEBRANCH 46 (Figure 3)

  PURPOSE: To compile one branch of a grammar 16 rule.

  INPUT:  TermSet: the right-hand-side of a branch of the rule;
          FormSet: the semantic form and variables associated
                   with the branch.

  OUTPUT: the compiled version of the branch.

  VARS:  None.

  IF TermSet is the empty list THEN
    RETURN the list obtained by inserting the end-of-branch marker
           at the head of FormSet.
  ELSE
    RETURN a list consisting of the first element of TermSet and
           MAKEPARSEBRANCH(the rest of TermSet, FormSet).
  ENDIF.

END MAKEPARSEBRANCH.

                    ********************************
                    *                              *
                    *    - FUNCTION·JETPARSE -     *
                    *                              *
                    ********************************

FUNCTION JETPARSE 53 (Figure 2)

  PURPOSE:  Parse a list of words against a given goal of the
            grammar 16.

  INPUT:  Name:  a token that is the name of the goal symbol to
                 parse for;
          Words: a list of tokens to parse.

  OUTPUT:  A list of PARSE records, corresponding to each complete
           and partial parse found.

  VARS:  Stack, PSR, PSRO, xyzList, sList, SemVars, MainForm, Rule,
         Tree, Branch, Node, TermList, ParseSet0, ParseSet1,
         SubStack, TreeSave, Parses, SV, SVL.

  ParseRule:
         SET ParseSet0, ParseSet1, SubStack, SemVars,
          TermList to the empty list.
         FETCH Rule and Tree using Name.
         SET TreeSave to Tree.

  TryBranch:
         IF Tree is empty THEN
           GOTO TryParse
         ENDIF.
```

```
POP next Branch from Tree.
GET next Node from Branch.
IF Node is an end-of-branch marker THEN
  SET sList to SEMVARTEST(SemVars, TAIL(Branch)).
  IF sList is not 'FAIL' THEN
    FETCH xyzList of Rule.
    FETCH MainForm from TAIL(Branch) using Name.
    IF MainForm is empty THEN
      SET MainForm to SUB-SEM-VARS(TAIL(MainForm), sList).
    ENDIF.
    FOR x in xyzList
      SET SV to binding of x in sList.
      ADD SV to end of list SVL.
    ENDFOR.
    SET PSR to a new PSR record
           with NodeType <- Name,
                SemVars <- SVL,
                MainForm <- MainForm,
                BottomLink <- xyzList,
                TermList <- REVERSE(TermList).
    SET PSR0 to a new PARSE record with
                Words <- Words,
                PSR <- PSR.
    ADD PSR0 to the end of list ParseSet0.
  ENDIF.
  GOTO TryBranch.
ENDIF.
IF Node is a terminal symbol THEN
  IF there are more Words AND Node matches the first
     word THEN
    PUSH Words, Tree, TreeSave, TermList, ParseSet1,
         SemVars on SubStack.
    ADD first word in Words to TermList.
    SET Words to remaining words.
    SET Tree to rest of Branch.
    SET TreeSave to Tree.
    SET ParseSet1 to NIL.
  ENDIF.
  GOTO TryBranch.
  ENDIF.
  IF Node is the non-terminal symbol <NULL> THEN
    PUSH Words, Tree, TreeSave, TermList, ParseSet1,
         SemVars on SubStack.
    SET Tree to rest of Branch.
    SET TreeSave to Tree.
    SET ParseSet1 to the empty list.
    GOTO TryBranch.
  ENDIF.
  **** Node is a non-terminal symbol other than <NULL>****
  PUSH Name, Words, Rule, Tree, TreeSave, Branch, Node,
       TermList, SubStack, ParseSet1, ParseSet0,
       SemVars on Stack.
  SET Name to name of non-terminal symbol assigned to Node.
  GOTO ParseRule.
```

```
TryParse:
      IF ParseSet1 is empty THEN
        GOTO SubPop.
        ENDIF.
        POP new values for Words, SemVars, TermList off
            ParseSet1.
        SET ParseSet1 to tail of ParseSet1.
        SET Tree to TreeSave.
        GOTO TryBranch.

SubPop:
      IF SubStack is empty THEN
        GOTO RulePop.
      POP new values for Words, Tree, TreeSave, TermList,
          ParseSet1, SemVars off SubStack.
      GOTO TryBranch.

RulePop:
      IF Stack is empty THEN
        RETURN from JETPARSE with value ParseSet0.
      ENDIF.
      SET Parses to ParseSet0.
      POP new values for Name, Words, Rule, Tree, TreeSave,
          Branch, Node, TermList, SubStack, ParseSet1,
          ParseSet0, SemVars off Stack.

SemTest:
      IF Parses is empty THEN
        GOTO TryBranch.
      ENDIF.
      PUSH Words, Tree, TreeSave, TermList, ParseSet1,
           SemVars on SubStack.
      SET ParseSet1 to PARSEINC(Parses, SemVars, TermList).
      SET TreeSave to rest of Branch.
      GOTO TryParse.

END JETPARSE.

                  ******************************
                  *                            *
                  *   - FUNCTION PARSEINC -    *
                  *                            *
                  ******************************

FUNCTION PARSEINC 54 (Figure 2)

  PURPOSE:  Construct incremental parse structures.
  INPUT:  Parses0:  A list of PARSE records;
          SemVars:  A list of semantic variables;
          TermList:  A list of words consumed while parsing some rule;
          Node:  The current node of the transition tree.
  OUTPUT:  A list of words, semantic variable bindings, and
           PSRT records.
  VARS:  SV, SetVars, ParseSet1, Psrt, Vars, PS1.
```

```
FOR Parse0 in Parses0
  FOR Var in variable-list of Node
     SET Val to binding of Var in Parse0.
     ADD Var-Val pair to end of list SetVars.
  ENDFOR.
  SET SV to SEMVARTEST(SemVars, SetVars).
  IF SV is not 'FAIL' THEN
    EXTRACT Words from Parse0.
    GET Vars from Node.
    EXTRACT PSR from Parse0.
    SET psrt to a new PSRT record with
                TopLink <- Vars,
                PSR <- PSR.
    SET PS1 to a list of Words, SV, a pair
              consisting of psrt and TermList.
    ADD PS1 to the list ParsSet1.
  ENDIF.
ENDFOR.
RETURN ParseSet1.

END PARSEINC.
```

```
                  ******************************
                  *                            *
                  *  - FUNCTION SEMVARTEST -   *
                  *                            *
                  ******************************
```

```
FUNCTION SEMVARTEST 55 (Figure 2)

    PURPOSE:  Evaluate proposed semantic variable bindings.
    INPUT:  SemVars:  A list of candidate semantic variable bindings;
            SetVars:  A list of old semantic variable bindings.
    OUTPUT:  If SemVars is incompatible with SetVars, 'FAIL';
             else, an updated list of variable bindings.
    VARS:  sList, SV, Fail.

    SET sList to SemVars.
    FOR v in SetVars UNTIL Fail
    SET SV to the binding of v in SemVars.
    IF SV is empty OR a wildcard THEN
      ADD v to the list sList.
    ELSEIF v and SV conflict THEN
      SET Fail to True.
    ENDIF.
  ENDFOR
  IF Fail THEN
    RETURN 'FAIL'
  ELSE
    RETURN sList.
  ENDIF.

END SEMVARTEST.
```

```
******************************
*                            *
* - FUNCTION EVALMAINFORM -  *
*                            *
******************************
```

```
FUNCTION EVALMAINFORM 56 (Figure 2)

  PURPOSE:  Construct a database navigation language expression
            (first navigation operations 23), given a parse tree.

  INPUT:  PSR1:  a parse tree, or part of a parse tree.

  OUTPUT:  a database navigation language (IL) expression.

  VARS:  EMF, PSRT1, PSR2.

  IF PSR1 is a PSR record THEN
     SET PSRT1 to the MainForm of PSR1.
     SET PSR2 to the empty list.
     FOR P2 in TermList of PSR1
        ADD EVALMAINFORM(P2) to the end of list PSR2.
     ENDFOR.
     SET EMF to BUILDFORM(PSRT1, PSR2).
  ELSE
     SET EMF to PSR1.
  ENDIF.
  RETURN EMF.
END EVALMAINFORM.
```

```
******************************
*                            *
*    - FUNCTION BUILDFORM -  *
*                            *
******************************
```

```
FUNCTION BUILDFORM 57 (Figure 2)

  PURPOSE:  Given a database navigation language (IL) (i.e. first
            navigation operations 23)
            template and a list of tokens,
            fills in the template with the tokens.

  INPUT:  MF:  An IL template;
          ETL: A list of IL tokens.

  OUTPUT:  The template MF instantiated to an IL
           expression, using the tokens in ETL.

  VARS:  SubMF.

  IF MF is atomic THEN
    RETURN MF.
  ELSEIF the first element is MF is '*' THEN
```

```
      RETURN a list containing NTH(ETL, Tail of MF).
   ELSEIF the first element in MF is '#' THEN
      RETURN NTH(ETL, Tail of MF).
   ELSE
      SET SubMF to the empty list.
      FOR x in MF
         ADD BUILDFORM(x, ETL) to the end of list SubMF
      END.
      RETURN SubMF.
   ENDIF.
END BUILDFORM.
```

```
                    ******************************
                    *                            *
                    *      - FUNCTION NTH -      *
                    *                            *
                    ******************************
```

```
FUNCTION NTH. 58 (Figure 2)

  PURPOSE:  RETURNS THE NTH ELEMENT OF A LIST.

  INPUT:  L:  a list;
          N:  a whole number.

  OUTPUT:  The Nth. element of L.

  IF L is the empty list THEN
    RETURN NIL.
  ELSEIF N is 1 THEN
    RETURN the first element of L.
  ELSE
    RETURN NTH(the tail of L, N-1).
  ENDIF.
END NTH.
```

## APPENDIX B

### PARSING ALGORITHM

```
Input:  Name  --- the grammar goal to be satisfied
        Words --- the input to be parsed

Output:  A list of valid parses found.

ParseRule:  Fetch the transition tree for Name.
            Enter state TryBranch

TryBranch:  If no more branches remain in the current
            tree, then
            -  enter state TryParse.
            Get the next branch off the tree.
            If at the end of the Branch, then
              -  perform semantic testing,
              -  build a representation for the parse, if valid,
              -  enter state TryBranch.
            If the branch can be followed by consuming
             a terminal, then
              -  save the context on SubStack,
              -  perform the next transition on the branch,
                 consuming input from Words,
              -  set the current tree to the remainder of
                 the branch,
              -  enter state TryBranch.
            If a subgoal must be satisfied to continue along
             the branch, then
              -  save the context on Stack,
              -  set Name to the new goal,
              -  enter state ParseRule.
            Enter state TryBranch.

TryParse:   If a new parse satisfying a previous subgoal
             can be found, then
              -  select the new parse,
              -  reset the context, including the tree,
                 to the situation obtaining after
                 satisfaction of the subgoal,
              -  enter state TryBranch.
            Enter state SubPop.

SubPop:     If a saved context exists on SubStack, then
              -  reset the context to the saved one,
              -  enter state TryBranch.
            Enter state RulePop.

RulePop:    If a saved context exists on Stack, then
              -  reset the context to the saved one,
              -  enter state Semtest.
            Terminate execution, returning all valid
             parses found.
```

SemTest: If no parses were found satisfying the most recently postulated subgoal, then
- enter state TryBranch.

Save the context on SubStack.

Perform semantic filtering on the above-mentioned parses.

Enter state TryParse.

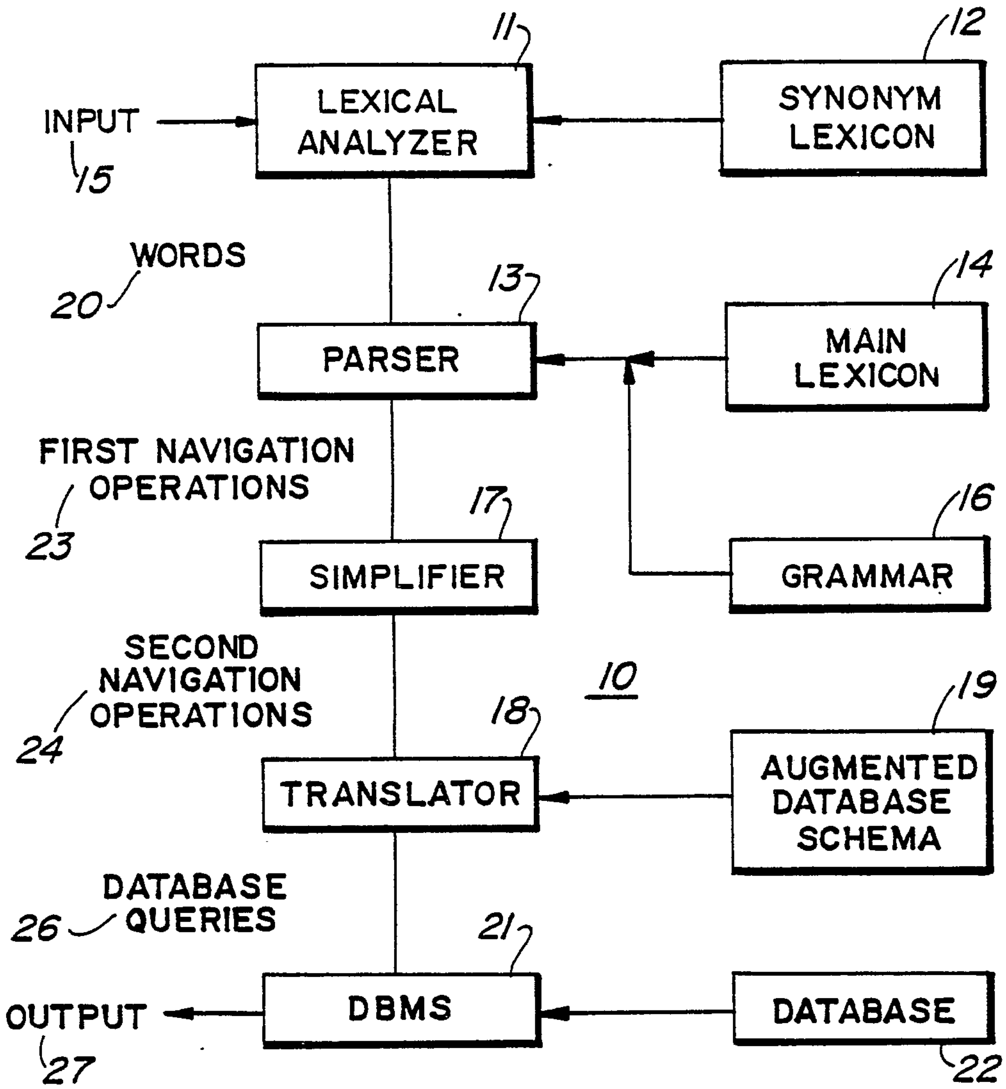
INPUT
15
LEXICAL ANALYZER
11
SYNONYM LEXICON
12
WORDS
20
PARSER
13
MAIN LEXICON
14
FIRST NAVIGATION OPERATIONS
23
SIMPLIFIER
17
GRAMMAR
16
SECOND NAVIGATION OPERATIONS
24
10
TRANSLATOR
18
AUGMENTED DATABASE SCHEMA
19
DATABASE QUERIES
26
DBMS
21
DATABASE
22
OUTPUT
27

FIG. 1

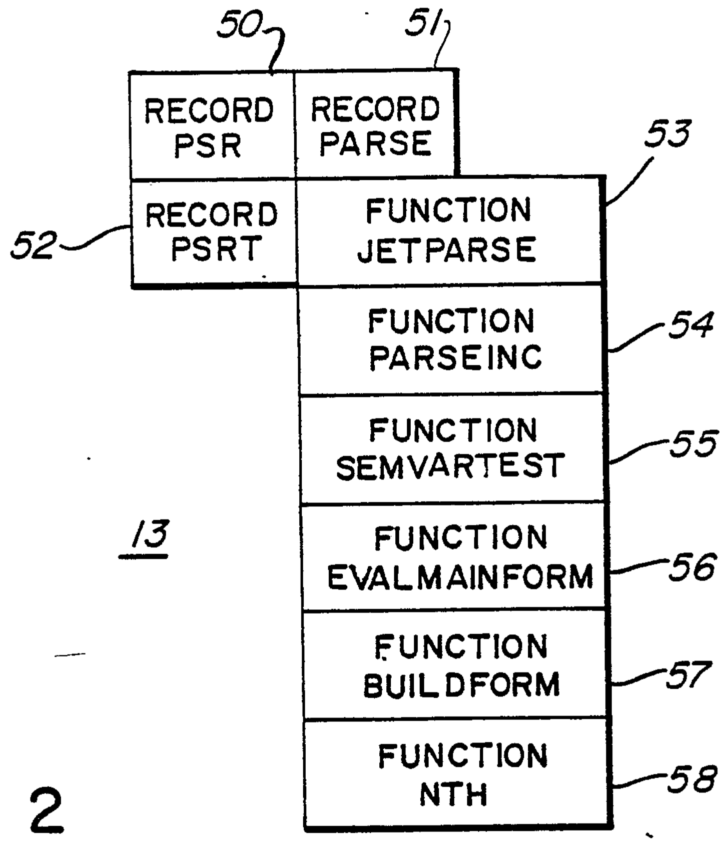
50
51
RECORD PSR
RECORD PARSE
53
52
RECORD PSRT
FUNCTION JETPARSE
FUNCTION PARSEINC
54
FUNCTION SEMVARTEST
55
13
FUNCTION EVALMAINFORM
56
FUNCTION BUILDFORM
57
FUNCTION NTH
58

FIG. 2

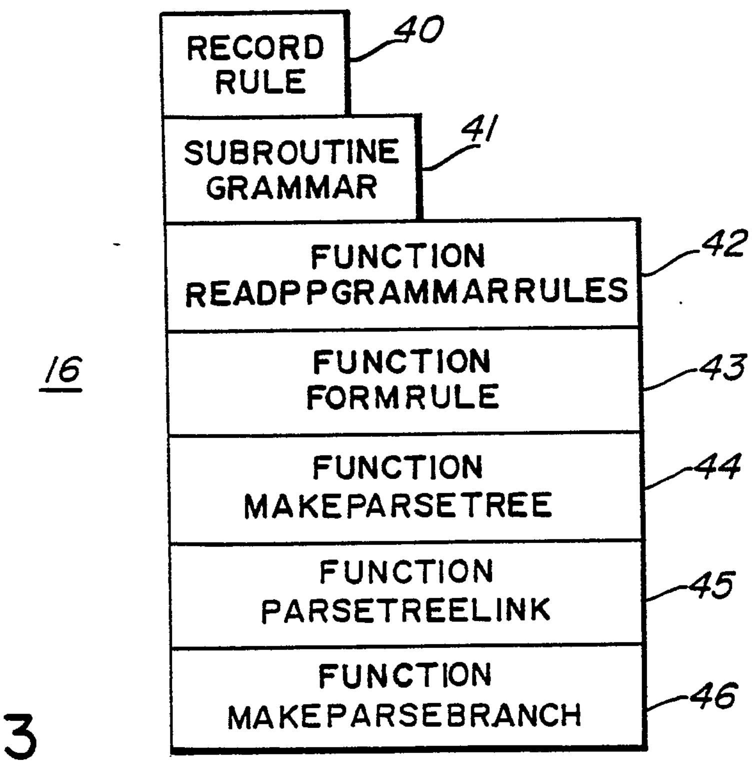
RECORD RULE
40
SUBROUTINE GRAMMAR
41
FUNCTION READPPGRAMMARRULES
42
16
FUNCTION FORMRULE
43
FUNCTION MAKEPARSETREE
44
FUNCTION PARSETREELINK
45
FUNCTION MAKEPARSEBRANCH
46

FIG. 3

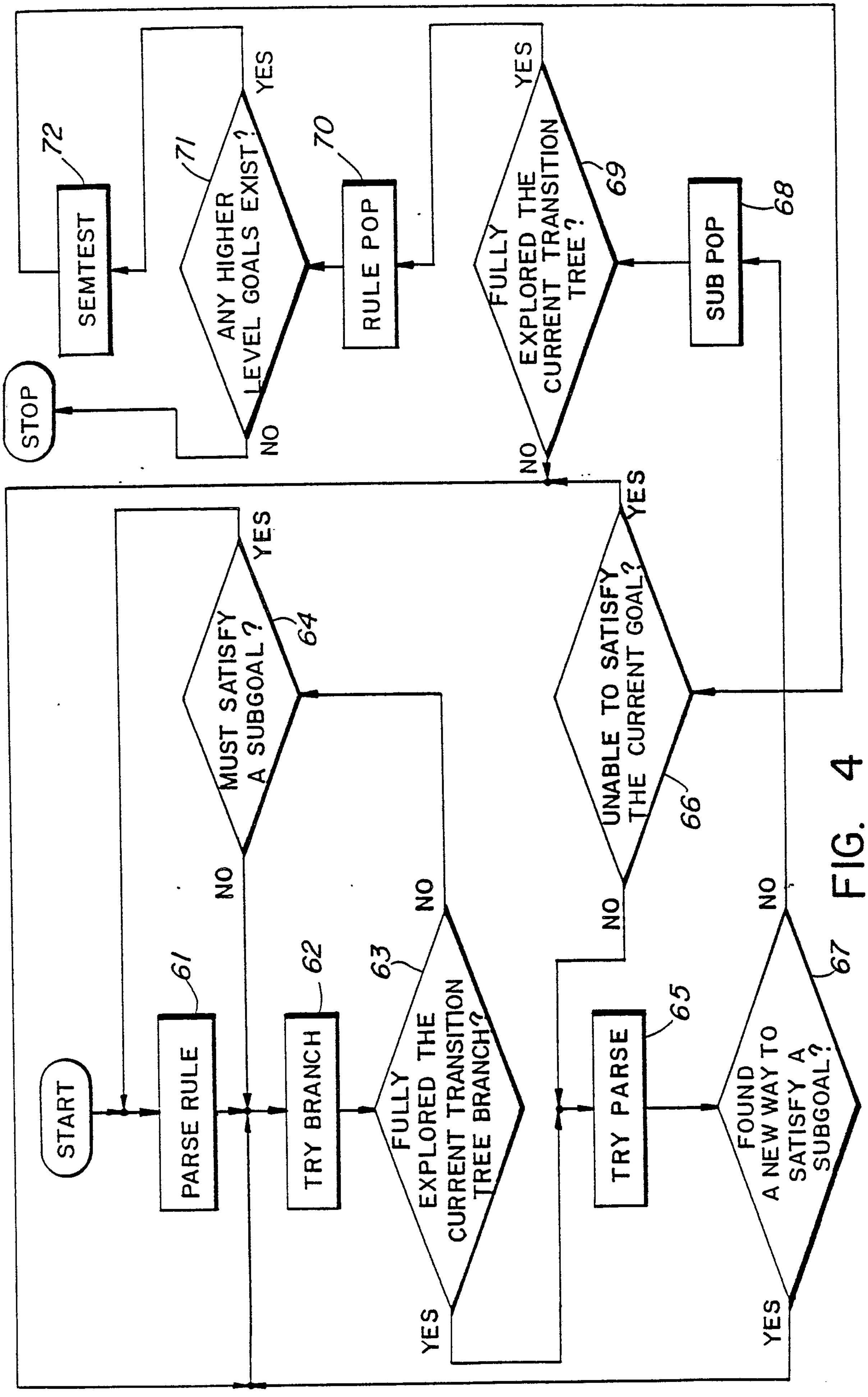
START
PARSE RULE
61
TRY BRANCH
62
FULLY EXPLORED THE CURRENT TRANSITION TREE BRANCH?
63
YES
NO
MUST SATISFY A SUBGOAL?
64
YES
NO
TRY PARSE
65
UNABLE TO SATISFY THE CURRENT GOAL?
66
YES
NO
FOUND A NEW WAY TO SATISFY A SUBGOAL?
67
YES
NO
SUB POP
68
FULLY EXPLORED THE CURRENT TRANSITION TREE?
69
YES
NO
RULE POP
70
ANY HIGHER LEVEL GOALS EXIST?
71
YES
NO
SEMTEST
72
STOP

FIG. 4